# FASCICULE DE BREVET EUROPEEN

(11) **EP 2 620 392 B1**
(45) Date de publication et mention de la délivrance du brevet: **31.12.2014**
(21) Numéro de dépôt: 13151112.3
(22) Date de dépôt: 14.01.2013
(51) Int. Cl.: B65G 1/06, B65G 35/08, B65G 1/04, B65G 47/51

(54) **Dispositif de stockage de pièces**
Vorrichtung zum Speichern von Teile
Apparatus for storing parts

(30) Priorité: 26.01.2012 FR 1250745
(43) Date de publication de la demande: 31.07.2013
(73) Titulaire: Etablissements Oger, 53000 Laval (FR)
(72) Inventeur: Himmer, Hervé, 53940 SAINT BERTHEVIN (FR); Kerveven, Steven, 29170 FOUESNANT (FR)
(74) Mandataire: Godineau, Valérie

(56) Documents cités:
- EP-A1- 1 314 661
- WO-A1-98/19940
- DE-A1- 3 307 201
- FR-A- 1 393 832
- FR-A- 1 521 065
- FR-A1- 2 240 168
- FR-A3- 2 321 438

## Description

La présente invention concerne un dispositif de stockage de pièces.

Elle concerne, plus particulièrement, un dispositif de stockage de pièces, du type comprenant au moins un châssis délimitant au moins deux chemins de guidage, de préférence sensiblement parallèles, superposés, dits l'un, supérieur, l'autre, inférieur, une pluralité d'ensemble de réception de pièce(s) à stocker sur ledit dispositif, des moyens d'entraînement des ensembles de réception de pièce(s) le long de chaque chemin de guidage, des moyens de transfert des ensembles de réception de pièce(s) d'un chemin de guidage à un autre, au moins une portion du trajet suivi par lesdits ensembles de réception de pièce(s) au cours de leur déplacement par les moyens d'entraînement et/ou de transfert étant apte à former une zone de chargement/déchargement de pièce(s), lesdits moyens de transfert comprenant d'une part, au moins un ascenseur, positionnable à une extrémité desdits chemins de guidage, ledit ascenseur comportant au moins une plateforme mobile en monte et baisse pour le passage de ladite plateforme d'un chemin de guidage à un autre et, d'autre part, au moins un organe de transfert apte à permettre le déplacement des ensembles de réception entre plateforme et chemin de guidage, chaque organe de transfert étant équipé d'un moyen escamotable de saisie de l'ensemble de réception apte à s'effacer lors de l'un des mouvements, tel que le mouvement aller, dudit organe de transfert et à venir en prise avec une partie de saisie dudit ensemble de réception lors du mouvement de direction opposée, tel que le mouvement retour, dudit organe de transfert.

Un tel dispositif est connu du document EP 1.314.661, qui décrit les caractéristiques du préambule de la revendication 1.

D'autres dispositifs de stockage de pièces sont également connus comme l'illustrent en particulier les brevets FR-1.393.832 et WO 98/19940. Toutefois, de tels dispositifs présentent un certain nombre d'inconvénients qui rendent en particulier leur modularité en longueur et/ou en nombre de chemins de guidage difficiles. En outre, leur encombrement est important. Or, dans le cas d'une utilisation d'un tel dispositif de stockage, au voisinage d'un centre d'usinage à commande numérique, pour permettre un chargement automatique en pièce dudit centre d'usinage, ce qui permet une absence de l'opérateur ou l'utilisation de l'opérateur à d'autres tâches afin d'augmenter la rentabilité du centre d'usinage, une telle modularité et un encombrement réduit du dispositif sont nécessaires.

Un but de la présente invention est de proposer un dispositif de stockage de pièces du type précité dont la conception permet l'obtention d'un dispositif modulable d'encombrement réduit, en particulier pour l'emprise au sol.

Un autre but de la présente invention est donc de proposer un dispositif de stockage de pièces du type précité dont la conception simplifiée permet de réduire et de faciliter les opérations de maintenance.

Un autre but de la présente invention est de proposer un dispositif de stockage de pièces du type précité dont la conception permet l'obtention d'un dispositif apte à être indifféremment entièrement ou partiellement chargé en pièces sans nuire au fonctionnement de l'ensemble.

A cet effet, l'invention a pour objet un dispositif de stockage de pièces, du type comprenant au moins un châssis délimitant au moins deux chemins de guidage, de préférence sensiblement parallèles, superposés, dits l'un, supérieur, l'autre, inférieur, une pluralité d'ensemble de réception de pièce(s) à stocker sur ledit dispositif, des moyens d'entraînement des ensembles de réception de pièce(s) le long de chaque chemin de guidage, des moyens de transfert des ensembles de réception de pièce(s) d'un chemin de guidage à un autre, au moins une portion du trajet suivi par lesdits ensembles de réception de pièce(s) au cours de leur déplacement par les moyens d'entraînement et/ou de transfert étant apte à former une zone de chargement/déchargement de pièce(s), lesdits moyens de transfert comprenant d'une part, au moins un ascenseur, positionnable à une extrémité desdits chemins de guidage, ledit ascenseur comportant au moins une plateforme mobile en monte et baisse pour le passage de ladite plateforme d'un chemin de guidage à un autre et, d'autre part, au moins un organe de transfert apte à permettre le déplacement des ensembles de réception entre plateforme et chemin de guidage, chaque organe de transfert étant équipé d'un moyen escamotable de saisie de l'ensemble de réception apte à s'effacer lors de l'un des mouvements, tel que le mouvement aller, dudit organe de transfert et à venir en prise avec une partie de saisie dudit ensemble de réception lors du mouvement de direction opposée, tel que le mouvement retour, dudit organe de transfert,
caractérisé en ce que chaque organe de transfert est un vérin disposé sur un chemin de guidage et en ce que le moyen escamotable de saisie équipant ledit vérin est formé par une lame pivotante chargée par ressort disposée à l'extrémité de la tige du vérin constitutif de l'organe de transfert, cette lame s'étendant perpendiculairement à la tige du vérin et étant montée pivotante autour d'un axe orthogonal à la tige du vérin.

Le fait de positionner chaque organe de transfert sur un chemin de guidage et non sur la plateforme de l'ascenseur ou à l'extérieur du dispositif permet de réduire l'encombrement de l'ensemble, de facilite le changement de l'ascenseur, pièce fragile en cas de défaillance de ces derniers et de réaliser l'ascenseur sous forme d'un élément rapporté sur le châssis du dispositif de sorte que la modularité en longueur est facilitée, la longueur du chemin de guidage pouvant être aisément modifiée sans interférer sur les extrémités du chemin de guidage et les ascenseurs de l'installation. De ces caractéristiques, il en résulte également une architecture simplifiée du dispositif. Le fait de réaliser chaque organe de transfert sous forme d'un vérin permet un transfert à fonctionnement sûr et une réduction de l'encombrement de l'ensemble, le vérin pouvant être positionné par exemple entre les rouleaux constitutifs du chemin de guidage dans l'encombrement dudit chemin de guidage. A nouveau, cette solution facilite la modularité en longueur des chemins de guidage, chaque chemin de guidage pouvant être aisément étendus en longueur car le vérin peut être entièrement embarqué sur ledit chemin de guidage. Dans cette conception, chaque organe de transfert lors de son mouvement aller ou retour correspondant au déplacement d'un ensemble de réception entre plateforme et chemin de guidage de pousseur des ensembles de réception disposés sur le chemin de guidage, de préférence par l'intermédiaire de l'ensemble déplacé. La présence d'un élément escamotable permet un tel montage. Enfin, les caractéristiques décrites ci-dessus permettent d'obtenir un dispositif à architecture simplifiée.

La présence d'une lame permet de disposer d'une surface d'appui importante de l'organe de transfert sur l'ensemble de réception, en particulier lorsque ce dernier est formé d'un porte-palette et d'une palette avec des moyens d'indexation en position du porte-palette sur le châssis qui nécessitent un effort de poussée constant reproductible et de force relativement élevée pour permettre un actionnement sûr et efficace des moyens d'indexation.

De préférence encore, chaque chemin de guidage est formé de deux rails parallèles et de rouleaux non motorisés à axes parallèles disposés entre lesdits rails avec leurs axes de rotation orthogonaux auxdits rails et en ce que chaque vérin constitutif d'un organe de transfert est disposé au moins partiellement entre deux rails. Il en résulte un encombrement réduit et une architecture simplifiée du dispositif.

L'ascenseur peut être réalisé sous forme d'un ensemble rapporté sur le châssis du dispositif, de sorte que la maintenance est facilitée.

De préférence, les moyens de transfert comprennent au moins deux ascenseurs positionnables l'un, à une extrémité, l'autre, à l'autre extrémité, desdits chemins de guidage, les plateformes desdits ascenseurs étant, de préférence, montées mobiles en synchronisme de manière à s'étendre simultanément aux extrémités d'un même chemin de guidage.

Dans ce mode de réalisation, généralement, les moyens de transfert comprennent au moins un organe de transfert par chemin de guidage. En particulier, l'un des organes de transfert étant disposé sur l'un des chemins de guidage à une extrémité dudit chemin de guidage, et l'autre ou un autre organe de transfert étant disposé sur l'autre chemin de guidage à l'extrémité opposée dudit chemin de guidage.

Les plateformes sont alternativement chargées et les ensembles de réception effectuent un trajet en boucle.

De préférence, pour au moins l'un des chemins de guidage, les moyens d'entrainement des ensembles de réception de pièces le long dudit chemin de guidage et l'organe de transfert entre plateforme et chemin de guidage sont au moins partiellement communs. Il en résulte une simplification du dispositif.

Les chemins de guidage peuvent ainsi être réalisés pour l'essentiel à partir d'éléments non motorisés.

Généralement, chaque ensemble de réception de pièce(s) comporte au moins une palette porte-pièce formant table de réception d'au moins une pièce et un porte-palette, ledit porte-palette étant monté à coulissement le long du chemin de guidage et ladite palette étant montée amovible sur le porte-palette, de préférence par déplacement à coulissement suivant un axe transversal à la direction de déplacement du porte-palette sur le chemin de guidage, les porte-palettes desdits ensembles étant disposés côte à côte le long de chaque chemin de guidage.

Les porte-palettes, interchangeables entre eux, d'une part, et le châssis et la plateforme du ou des ascenseurs d'autre part, sont équipés de moyens d'indexation pour une indexation de la position d'au moins certains des porte-palettes sur ledit châssis ou la plateforme du ou des ascenseurs pour un déplacement en pas à pas des porte-palettes le long de chaque chemin de guidage, lesdits porte-palettes occupant, au cours de leur déplacement en pas à pas, une pluralité de positions successives dont au moins l'une correspond à une position dans la zone de chargement/déchargement au cours de laquelle la palette associée audit porte-palette est apte à être déplacée entre le dispositif de stockage et une unité de traitement des pièces.

Dans le mode de réalisation où chaque organe de transfert est un vérin équipé d'un moyen escamotable de saisie de type lame, la tige du vérin est configurée pour permettre lors de sa rentrée , par poussée de la lame sur l'ensemble de réception, le déplacement de l'ensemble de réception en direction du chemin de guidage jusqu'à ce que les moyens d'indexation en position de l'ensemble de réception viennent en prise avec les moyens d'indexation complémentaires ménagés sur le chemin de guidage.

En particulier, lors d'une extension du vérin, ladite lame est montée sur une partie de sa trajectoire mobile entre une position escamotée pour passer sous le porte-palette disposé sur une plateforme d'ascenseur et une position relevée active après passage dudit porte-palette, ladite lame étant en position relevée positionnée le long d'un des bords longitudinaux du porte-palette disposé sur la plateforme d'un ascenseur.

De préférence, le dispositif est équipé de moyens de chargement/déchargement en palette et chaque palette, déplaçable en pas à pas pour occuper une succession de positions, est accouplable, ou respectivement désaccouplable, des moyens de chargement/déchargement lors de son déplacement entre deux positions dont l'une correspond à la position dans la zone de chargement/déchargement.

Ces moyens de chargement/déchargement peuvent permettre le déplacement des palettes porte-pièces entre dispositif de stockage et centre d'usinage numérique.

Le dispositif peut également être équipé d'une plateforme d'accueil des palettes porte-pièce(s) positionnée le long d'au moins l'un des chemins de guidage, le déplacement des palettes porte-pièce(s) entre plateforme d'accueil et porte-palettes étant opérée manuellement par un opérateur par simple coulissement d'une palette le long du porte-palettes associé pour permette un chargement ou un déchargement en palettes porte-pièces du dispositif.

De préférence, chaque porte-palette est équipé, sur au moins l'un de ses bords longitudinaux, d'au moins une pastille en matière élastiquement déformable.

De préférence, le châssis est un châssis modulaire modulable en longueur des chemins de guidage et/ou en nombre de chemins de guidage.

L'invention a encore pour objet un procédé de stockage de pièces à l'aide d'un dispositif de stockage du type précité, ledit dispositif comprenant au moins deux ascenseurs positionnables, l'un à une extrémité, l'autre à l'autre extrémité desdits chemins de guidage, les plateformes desdits ascenseurs étant montées mobiles en synchronisme de manière à s'étendre simultanément aux extrémités d'un même chemin de guidage, les moyens de transfert comprenant au moins un organe de transfert par chemin de guidage, caractérisé en ce que ledit procédé comprend au moins :
- une étape de positionnement de la plateforme mobile de chacun des ascenseurs au niveau d'un même chemin de guidage,
- une étape d'actionnement de l'organe de transfert associé audit chemin de guidage pour permettre en parallèle du déchargement d'au moins un ensemble de réception de la plateforme d'un ascenseur, le chargement d'au moins un ensemble de réception de l'autre ascenseur.

L'invention sera bien comprise à la lecture de la description suivante d'exemples de réalisation, en référence aux dessins annexés dans lesquels :

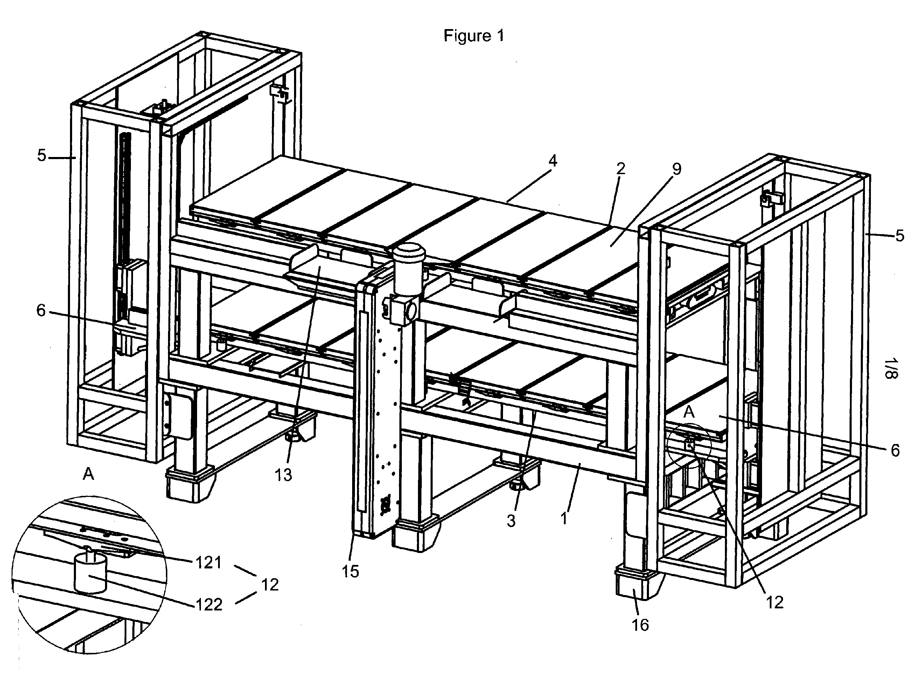

La figure 1 représente une vue en perspective d'un dispositif conforme à l'invention avec une vue de détail A des moyens d'indexation de la position d'un porte-palette sur la plateforme d'un ascenseur ;
La figure 2 représente une vue en perspective d'un dispositif conforme à l'invention dans laquelle les ensembles de réception ont été omis pour permettre de mieux visualiser les chemins de guidage ;

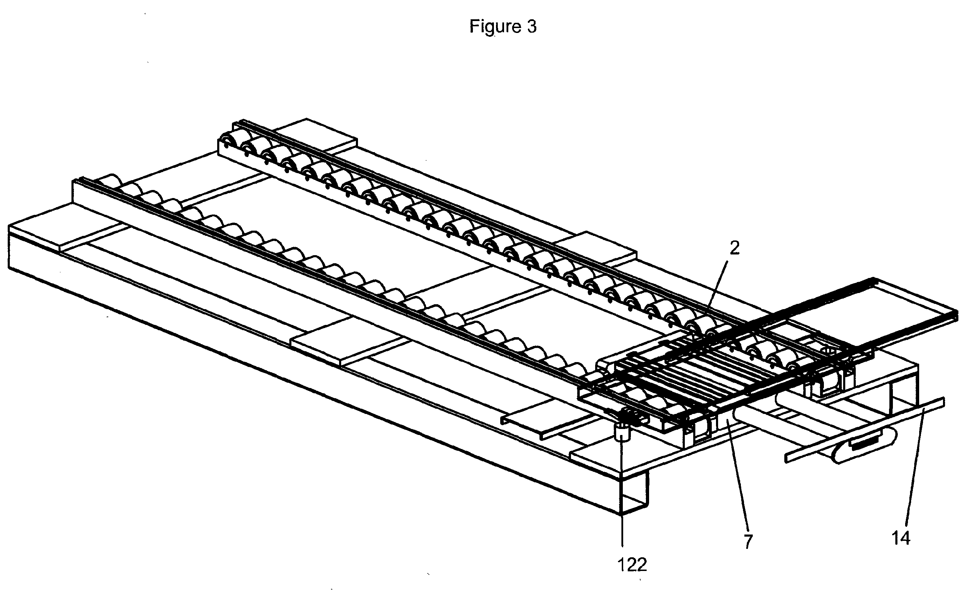

La figure 3 représente une vue d'un chemin de guidage équipé d'un organe de transfert en position sortie de la tige du vérin constitutive dudit organe de transfert et non escamotée du moyen de saisie, un porte-palette avec une palette en cours de positionnement par coulissement sur le porte-palette ayant été représenté ;

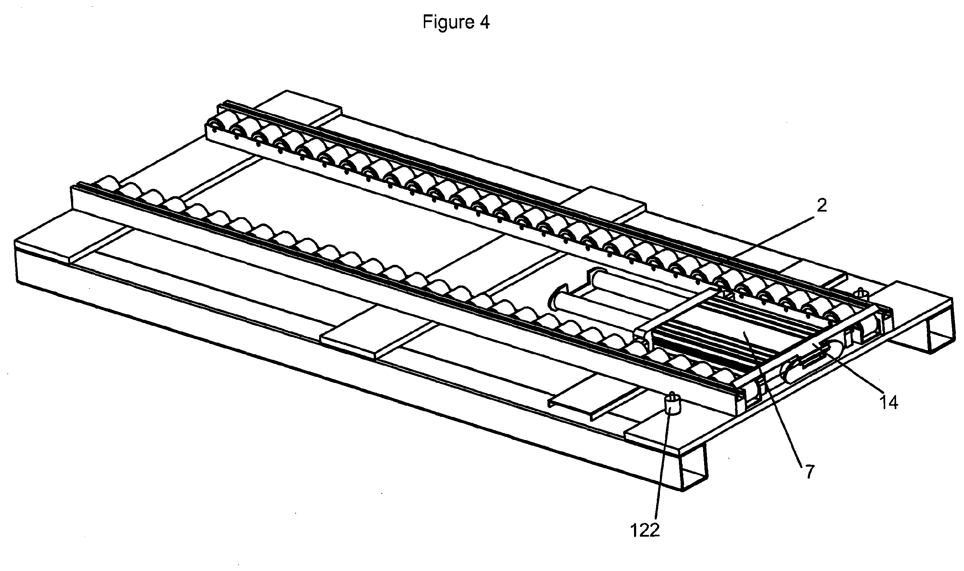

La figure 4 représente une vue d'un chemin de guidage équipé d'un organe de transfert en position rentrée de la tige du vérin constitutif dudit organe de transfert et escamotée du moyen de saisie ;

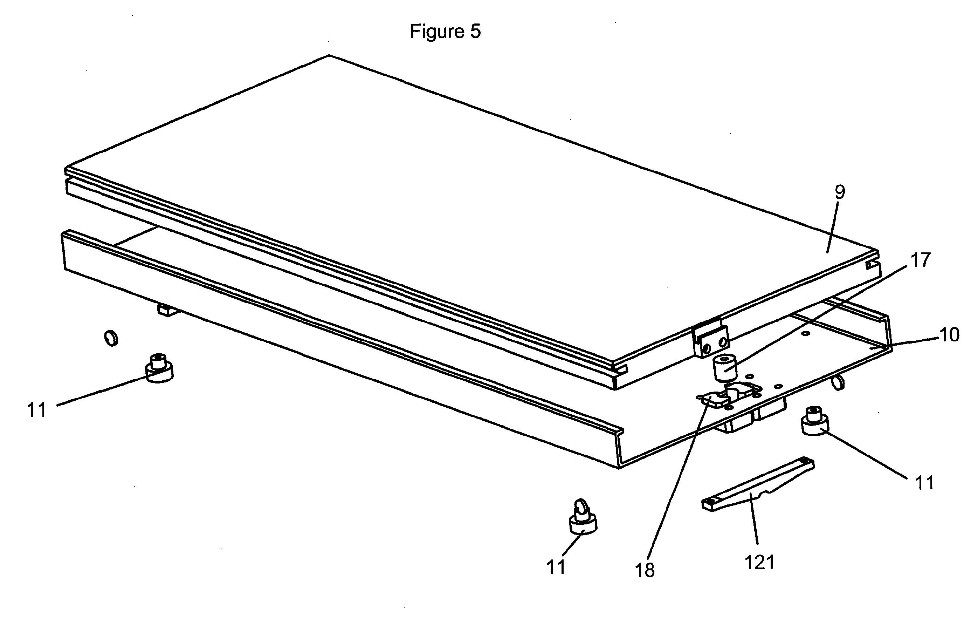

La figure 5 représente une vue en perspective à l'état éclaté des éléments d'un ensemble de réception ;

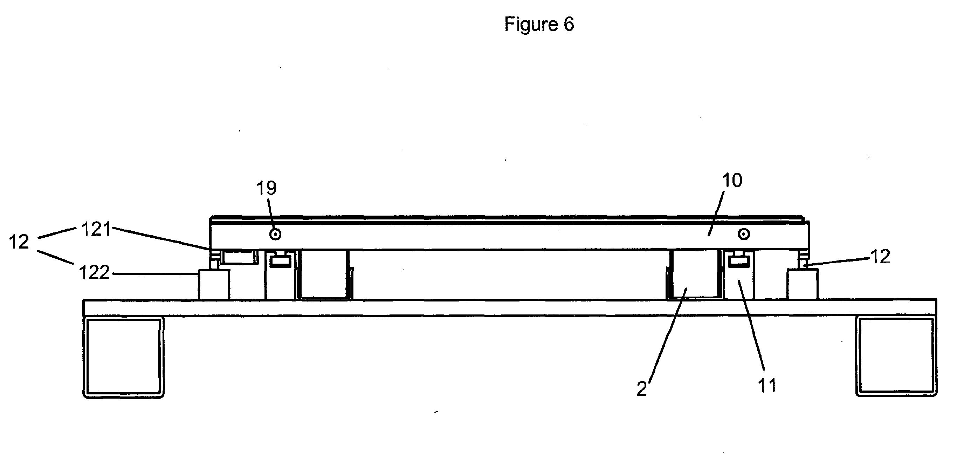

La figure 6 représente une vue de côté d'un ensemble de réception à l'état monté sur un chemin de guidage ;
La figure 7 représente une vue en perspective d'une première variante d'un dispositif de stockage conforme à l'invention ;
La figure 8 représente une vue en perspective d'une deuxième variante d'un dispositif de stockage conforme à l'invention.

Comme mentionné ci-dessus, le dispositif de stockage de pièces, objet de l'invention, est plus particulièrement destiné à être positionné au voisinage d'un centre d'usinage à commande numérique pour permettre le déplacement automatique des pièces à usiner du dispositif de stockage vers le centre d'usinage et des pièces usinées du centre d'usinage vers le dispositif de stockage en l'absence de tout opérateur.

Ce dispositif de stockage comprend un châssis 1 délimitant au moins deux chemins 2, 3 de guidage sensiblement parallèles superposés dits l'un, supérieur, et représenté en 2 aux figures, l'autre, inférieur, et représenté en 3 aux figures.

Dans les exemples représentés, chaque chemin de guidage est formé de deux rails parallèles et de rouleaux non motorisés à axes parallèles disposés entre lesdits rails avec leurs axes de rotation orthogonaux auxdits rails. Ces rouleaux sont formés chacun d'un ensemble de deux rouleaux alignés séparés l'un de l'autre par un espace à l'intérieur duquel s'insère au moins partiellement l'organe de transfert.

Ces deux chemins de guidage sont maintenus, à l'état superposé, par l'intermédiaire de structures de type cadre formées par assemblage de montants et de traverses.

Le châssis 1 est équipé de pieds 16 d'appui au sol réglables en hauteur pour permettre une adaptation à tout type de centre d'usinage.

Le dispositif comprend encore une pluralité d'ensembles 4 de réception de pièce(s) à stocker au moins sur chaque chemin 2, 3 de guidage.

Dans les exemples représentés, chaque ensemble 4 de réception de pièces comporte au moins une palette 9 porte-pièce(s) formant table de réception d'au moins une pièce et un porte-palette 10.

Chaque palette 9 se présente sous forme d'une tablette rectangulaire dont les bords sont rainurés pour un montage à coulissement sur le porte-palette 10. Le porte-palette 10 se présente également sous forme d'une plaque rectangulaire à bords longitudinaux relevés pour délimiter une aile apte à s'insérer dans une rainure du bord longitudinal de la palette 9 associée.

Palette 9 et porte-palette 10 sont disposés avec leurs bords longitudinaux s'étendant suivant une direction transversale, en l'occurrence perpendiculaire, à l'axe longitudinal des chemins 2, 3 de guidage.

Le porte-palette de chaque ensemble de réception est équipé sur sa face tournée vers le chemin de guidage sur lequel il prend appui, de galets 11 aptes à s'insérer dans les rails dudit chemin de guidage pour un montage à coulissement du porte-palettes le long de chaque chemin de guidage.

Chaque palette 9 est montée amovible, sur le porte-palette 10 auquel elle est associée, par déplacement à coulissement suivant un axe transversal à la direction de déplacement du porte-palette 10 sur le chemin 2, 3 de guidage.

Chaque palette coulisse donc longitudinalement le long dudit porte-palette auquel elle est associée. Pour éviter un coulissement intempestif de la palette sur le porte-palette, des moyens de retenue de la palette sur le porte-palette sont prévus.

Ces moyens de retenue sont, dans l'exemple, représentés formés d'un doigt 17 équipant la palette et de deux mâchoires 18, rappelées par ressort en position rapprochée, équipant le porte-palette.

En position de la palette 9 sur le porte-palette 10, le doigt 17 de la palette 9 s'insère entre les mâchoires 18 du porte-palette. Un effort de poussée ou de traction sur la palette suivant une direction parallèle à son axe longitudinal permet de dégager le doigt 17 de la palette 9 des mâchoires 18 du porte-palette 10 pour permettre un déplacement à coulissement de la palette 9.

Les porte-palettes desdits ensembles sont disposés côte à côte le long de chaque chemin de guidage.

Le dispositif de stockage comporte un nombre de porte-palettes égal à 2n + 1, n correspondant au nombre de porte-palettes pouvant être positionné sur un chemin de guidage si on considère que chaque chemin de guidage est apte à accueillir un même nombre de porte-palettes, et que le nombre de chemins de guidage est égal à 2.

Lorsque le nombre de chemins de guidage est égal à m, le nombre de porte-palettes est au moins égal à (m x n) + 1.

En résumé, le nombre de porte-palettes est donc généralement supérieur au nombre d'emplacements de porte-palettes délimités par chacun des chemins de guidage.

Les porte-palettes sont équipés, sur leurs bords longitudinaux, de pastilles 19 en matière élastiquement déformable pour éviter un contact bruyant entre porte-palettes. Ces porte-palettes sont identiques et interchangeables entre eux.

Les porte-palettes 10, interchangeables entre eux, d'une part, et le châssis 1 et la plateforme 6 du ou des ascenseurs 5 d'autre part, sont équipés de moyens 12 d'indexation en position pour un déplacement en pas à pas des porte-palettes 10 le long de chaque chemin 2, 3 de guidage. Lesdits porte-palettes 10 occupent, au cours de leur déplacement en pas à pas, une pluralité de positions successives dont au moins l'une correspond à une position dans la zone 13 de chargement/déchargement au cours de laquelle la palette 9, associée au porte-palette 10 disposé dans la zone 13, est apte à être déplacée entre le dispositif de stockage et une unité de traitement des pièces.

Ces moyens 12 d'indexation sont ici réalisés par un plot 122 surmonté d'un téton à ressort disposé sur le chemin de guidage ou la plateforme de chaque ascenseur et d'un logement avec guide d'entrée et de sortie embarqué sur les porte-palettes.

L'insertion du téton du plot dans le logement assure le maintien en position du porte-palette sur le châssis du dispositif.

Dans les exemples représentés, des plots sont prévus au moins aux extrémités des chemins de guidage et sur les plateformes des ascenseurs qui seront décrits ci-après.

Chaque palette est, quant à elle, équipée de long de chacun de ses bords transversaux d'un logement apte à coopérer avec le téton d'un plot.

Le dispositif comprend encore des moyens 8 d'entraînement des ensembles 4 de réception de pièce(s) le long de chaque chemin de guidage et des moyens 5, 7 de transfert des pièces d'un chemin de guidage à un autre. Au moins une portion du trajet suivi par lesdits ensembles 4 de réception de pièce(s) au cours de leur déplacement par les moyens d'entraînement et/ou de transfert est apte à former une zone 13 de chargement/déchargement de pièce(s).

Les moyens 5, 7 de transfert comprennent au moins d'une part, un ascenseur 5 positionnable de préférence à une extrémité desdits chemins 2, 3 de guidage, ledit ascenseur 5 comportant au moins une plateforme 6 mobile en monte et baisse pour le passage de ladite plateforme 6 d'un chemin de guidage à un autre et, d'autre part, au moins un organe 7 de transfert apte à permettre le déplacement des ensembles 4 de réception entre plateforme 6 et chemin 2, 3 de guidage.

Dans les exemples représentés, les moyens 5, 7 de transfert comprennent deux ascenseurs 5 positionnables l'un, à une extrémité, l'autre, à l'autre extrémité, desdits chemins 2, 3 de guidage. Les plateformes 6 desdits ascenseurs 5 sont montées mobiles en synchronisme de manière à s'étendre simultanément aux extrémités d'un même chemin 2, 3 de guidage.

Les moyens 5, 7 de transfert comprennent un organe 7 de transfert par chemin 2, 3 de guidage.

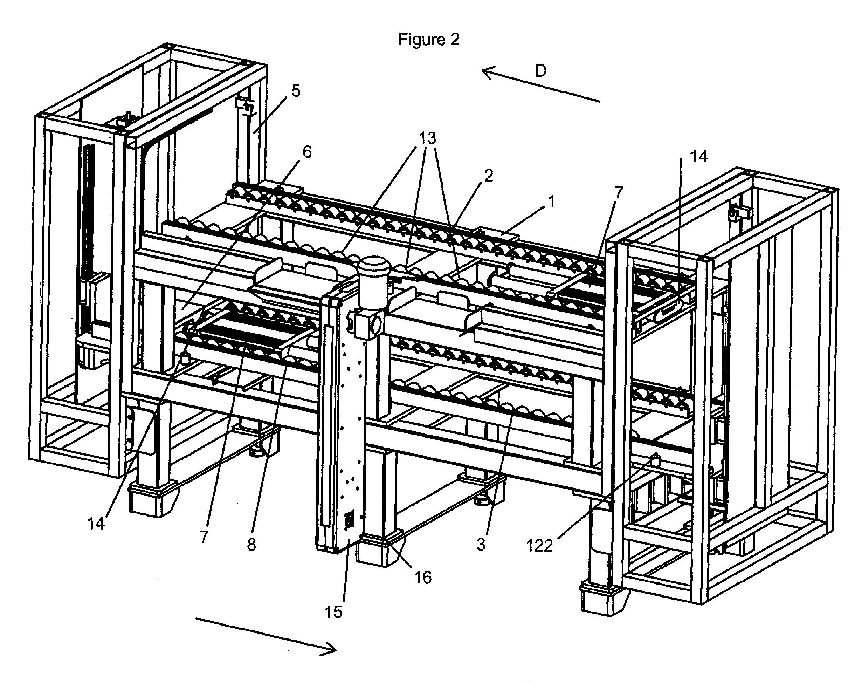

L'un des organes de transfert est donc disposé sur l'un des chemins de guidage à une extrémité dudit chemin de guidage, et l'autre organe de transfert est disposé sur l'autre chemin de guidage à l'extrémité opposée dudit chemin de guidage. Ainsi, l'un des organes de transfert est disposé, sur le chemin de guidage supérieur, au niveau de l'extrémité du chemin de guidage représentée à droite dans la figure 2, et l'autre organe de transfert est disposé sur le chemin de guidage inférieur, au niveau de l'extrémité du chemin de guidage représentée à gauche dans la figure 2.

Le positionnement des organes de transfert sur la partie du châssis délimitant les chemins de guidage, et non dans la partie ascenseur du dispositif de stockage, permet de faciliter le changement de l'ascenseur en cas de défaillance de ce dernier.

Dans les exemples représentés, les moyens 8 d'entraînement des ensembles 4 de réception des pièces le long de chaque chemin de guidage et l'organe 7 de transfert entre plateforme 6 et chemin de guidage sont communs.

Chaque organe 7 de transfert est un organe monté mobile en va-et-vient formé ici en l'occurrence par un vérin.

A chaque fois, l'organe de transfert fait office, lors de son mouvement dit retour de pousseur des ensembles de réception disposés sur le chemin 2, 3 de guidage par l'intermédiaire de l'ensemble déplacé.

Cet organe 7 de transfert est équipé d'un moyen 14 escamotable de saisie de l'ensemble 4 de réception apte à s'effacer lors du mouvement aller dudit organe 7 de transfert et à venir en prise avec une partie de saisie dudit ensemble 4 de réception lors du mouvement retour dudit organe 7 de transfert.

Les ensembles de réception suivent ainsi une trajectoire en boucle suivant la direction D représentée à la figure 2.

L'organe de transfert équipant le chemin 2 de guidage supérieur déplace par poussée les ensembles de réception vers la gauche le long du chemin de guidage supérieur, tandis que l'organe de transfert équipant le chemin 3 de guidage inférieur déplace par poussée les ensembles de réception vers la droite le long du chemin de guidage inférieur. Cette poussée est exercée à chaque fois par l'intermédiaire de l'ensemble de réception disposé sur la plateforme de l'ascenseur et en cours de transfert de la plateforme de l'ascenseur vers le chemin de guidage.

Avec un tel principe de fonctionnement, lorsqu'une plateforme de l'ascenseur est, à l'aide d'un organe de transfert, déchargée d'un ensemble de réception, la plateforme de l'ascenseur située au même niveau, à l'extrémité opposée du chemin de guidage, se charge en un ensemble de réception du fait du déplacement d'un pas des ensembles de réception disposés côte à côte sur le chemin de guidage, d'une extrémité à une autre dudit chemin de guidage.

L'ensemble de réception venant d'être chargé sur une plateforme d'ascenseur est amené via ladite plateforme au niveau d'un autre chemin de guidage où il est pris en charge par un organe de transfert qui, de la même manière, assure lors du déchargement dudit ensemble de réception de la plateforme dudit ascenseur, le chargement d'un ensemble de réception sur la plateforme de l'ascenseur située à l'extrémité opposée dudit chemin de guidage, puis le cycle peut reprendre pour amener à nouveau lesdites plateformes au niveau d'un autre chemin de guidage.

Il suffit ainsi de deux vérins et deux plateformes d'ascenseurs pour entraîner en déplacement un grand nombre d'ensembles de réception le long d'une trajectoire en boucle faisant intervenir deux chemins de guidage.

Comme mentionné ci-dessus, pour permettre le déplacement d'un ensemble de réception entre plateforme d'ascenseur et chemin de guidage, l'organe 7 de transfert est équipé d'un moyen 14 escamotable de saisie de l'ensemble 4 de réception.

Dans les exemples représentés, ce moyen 14 de saisie est formé par une lame pivotante chargée par ressort disposée à l'extrémité de la tige du vérin constitutif de l'organe de transfert. Cette lame s'étend perpendiculairement à la tige du vérin et est montée pivotante autour d'un axe orthogonal à la tige du vérin.

Cette lame est apte, lors d'une extension du vérin, à s'escamoter pour passer sous le porte-palette disposé sur une plateforme d'ascenseur, puis une fois le porte-palette passé, à se relever pour venir se positionner le long d'un des bords longitudinaux du porte-palette disposé sur la plateforme d'un ascenseur.

La rentrée de la tige du vérin assure, par poussée de la lame sur l'ensemble de réception, le déplacement de l'ensemble de réception en direction du chemin de guidage jusqu'à ce que les moyens 121 d'indexation en position de l'ensemble de réception viennent en prise avec les moyens 122 d'indexation complémentaires ménagés sur le chemin de guidage.

Comme mentionné ci-dessus, au cours de leur déplacement en pas à pas, les porte-palettes 10 occupent une pluralité de positions successives dont au moins l'une correspond à une position dans la zone 13 de chargement/déchargement au cours de laquelle la palette 9 associée audit porte-palette 10 est apte à être déplacée entre le dispositif de stockage et une unité de traitement des pièces, telle que le centre d'usinage à commande numérique.

A cet effet, le dispositif est équipé de moyens 15 de chargement/déchargement en palettes 9. Chaque palette 9 déplaçable en pas à pas pour occuper une succession de positions est accouplable, ou respectivement désaccouplable, des moyens 15 de chargement/déchargement lors de son déplacement entre deux positions dont l'une correspond à la position dans la zone 13 de chargement/déchargement.

Ces moyens 15 de chargement/déchargement peuvent comprendre un organe de chargement/déchargement d'une palette destiné à coopérer avec un organe de saisie complémentaire, tel qu'un crochet, ménagé sur chaque palette porte-pièces. Ce crochet de chaque palette défile devant l'organe de chargement/déchargement lors du passage d'une position à une autre desdites palettes et est situé, en position de déplacement de la palette vers, par exemple, le centre d'usinage, sur la trajectoire suivie par l'organe de chargement/déchargement déplaçable en direction du centre d'usinage pour permettre simultanément au déplacement de l'organe de chargement/déchargement en direction du centre d'usinage, l'entraînement en déplacement de la palette porte-pièce(s).

De la même manière, il peut être procédé, de préférence dans une autre zone de chargement/déchargement du dispositif de stockage, au remplacement des palettes porte-pièce(s) par d'autres palettes porte-pièce(s) pour préparer une nouvelle série de palettes porte-pièce(s).

Ce chargement/déchargement peut s'opérer manuellement par simple coulissement des palettes porte-pièce(s) et remplacement par de nouvelles palettes porte-pièce(s). Ce remplacement peut s'opérer en parallèle du déplacement des palettes porte-pièce(s) vers le centre d'usinage ou de manière décalée. Ce remplacement peut également s'opérer de manière automatique.

Pour augmenter les possibilités du dispositif, le châssis 1 est un châssis modulaire modulable en longueur des chemins 2, 3 de guidage et/ou en nombre de chemins de guidage.

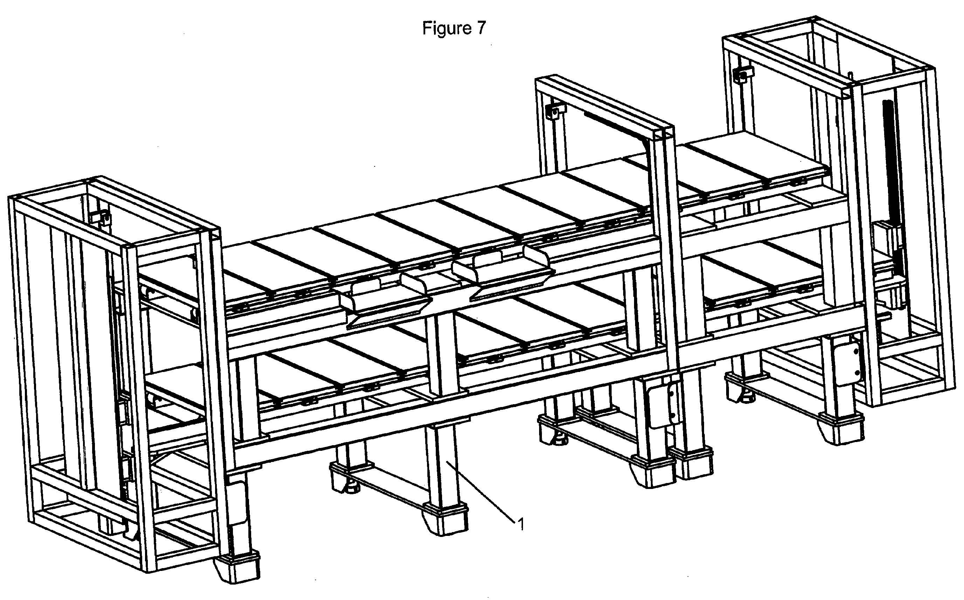

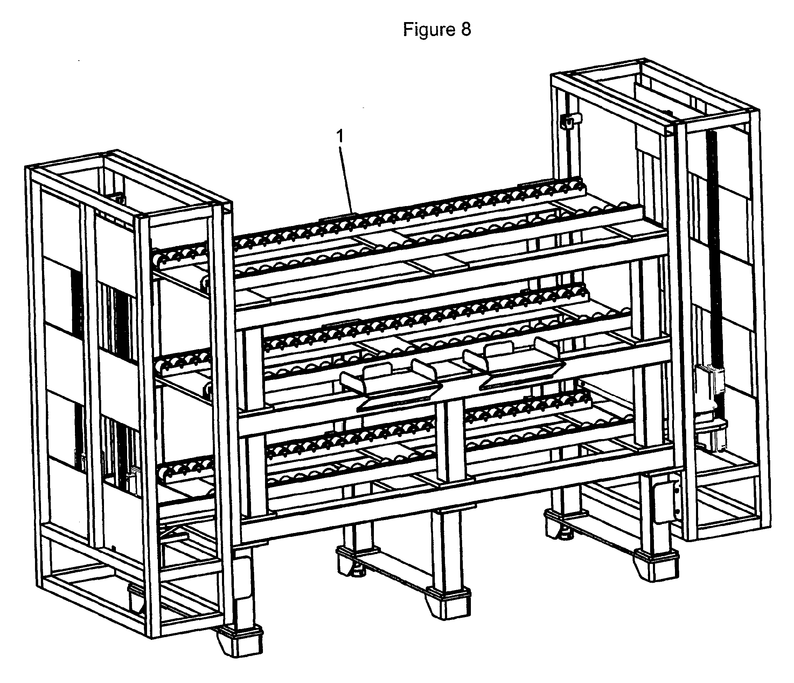

Ainsi, la figure 7 illustre un châssis modulaire formé de deux modules disposés côte à côte et délimitant chacun une section d'un chemin de guidage. La figure 8 illustre un châssis modulaire formé d'au moins trois modules superposés, chaque module délimitant un chemin de guidage, de sorte que le châssis obtenu est un châssis à trois chemins de guidage dont le fonctionnement peut être similaire à celui décrit pour un dispositif de stockage à deux chemins de guidage.

Les ascenseurs sont réalisés sous forme d'ensembles rapportés à chacune des extrémités des chemins de guidage. Ces ascenseurs sont couplés de manière suspendue au reste du châssis du dispositif de stockage. Ainsi, indépendamment du nombre de chemins de guidage, le nombre d'ascenseurs peut être limité à deux.

## Revendications

1. Dispositif de stockage de pièces, du type comprenant au moins un châssis (1) délimitant au moins deux chemins (2, 3) de guidage, de préférence sensiblement parallèles, superposés, dits l'un (2), supérieur, l'autre (3), inférieur, une pluralité d'ensemble (4) de réception de pièce(s) à stocker sur ledit dispositif, des moyens (8) d'entraînement des ensembles (4) de réception de pièce(s) le long de chaque chemin de guidage, des moyens (5, 7) de transfert des ensembles de réception de pièce(s) d'un chemin de guidage à un autre, au moins une portion du trajet suivi par lesdits ensembles (4) de réception de pièce(s) au cours de leur déplacement par les moyens d'entraînement et/ou de transfert étant apte à former une zone (13) de chargement/déchargement de pièce(s), lesdits moyens (5, 7) de transfert comprenant d'une part, au moins un ascenseur (5), positionnable à une extrémité desdits chemins (2, 3) de guidage, ledit ascenseur (5) comportant au moins une plateforme (6) mobile en monte et baisse pour le passage de ladite plateforme (6) d'un chemin de guidage à un autre et, d'autre part, au moins un organe (7) de transfert apte à permettre le déplacement des ensembles (4) de réception entre plateforme (6) et chemin (2, 3) de guidage, chaque organe (7) de transfert étant équipé d'un moyen (14) escamotable de saisie de l'ensemble (4) de réception apte à s'effacer lors de l'un des mouvements, tel que le mouvement aller, dudit organe (7) de transfert et à venir en prise avec une partie de saisie dudit ensemble (4) de réception lors du mouvement de direction opposée, tel que le mouvement retour, dudit organe (7) de transfert, **caractérisé en ce que** chaque organe (7) de transfert est un vérin disposé sur un chemin de guidage et **en ce que** le moyen (14) escamotable de saisie équipant ledit vérin est formé par une lame pivotante chargée par ressort disposée à l'extrémité de la tige du vérin constitutif de l'organe de transfert, cette lame s'étendant perpendiculairement à la tige du vérin et étant montée pivotante autour d'un axe orthogonal à la tige du vérin.

2. Dispositif de stockage de pièces selon la revendication 1, **caractérisé en ce que** chaque chemin (2, 3) de guidage est formé de deux rails parallèles et de rouleaux non motorisés à axes parallèles disposés entre lesdits rails avec leurs axes de rotation orthogonaux auxdits rails et **en ce que** chaque vérin constitutif d'un organe (7) de transfert est disposé au moins partiellement entre deux rails.

3. Dispositif de stockage de pièces selon l'une des revendications précédentes, **caractérisé en ce que** le ou chaque ascenseur (5) est réalisé sous forme d'un ensemble rapporté à une extrémité d'un chemin (2, 3) de guidage

4. Dispositif de stockage de pièces selon l'une des revendications précédentes, **caractérisé en ce que** les moyens (5, 7) de transfert comprennent au moins deux ascenseurs (5) positionnables l'un, à une extrémité, l'autre, à l'autre extrémité, desdits chemins (2, 3) de guidage, et au moins un organe (7) de transfert par chemin (2, 3) de guidage, l'un des organes (7) de transfert étant disposé sur l'un des chemins de guidage à une extrémité dudit chemin de guidage, et l'autre ou un autre organe (7) de transfert étant disposé sur l'autre chemin de guidage à l'extrémité opposée dudit chemin de guidage, les plateformes (6) desdits ascenseurs (5) étant, de préférence, montées mobiles en synchronisme de manière à s'étendre simultanément aux extrémités d'un même chemin (2, 3) de guidage.

5. Dispositif de stockage de pièces selon l'une des revendications précédentes, **caractérisé en ce que**, pour au moins l'un des chemins (2, 3) de guidage, les moyens (8) d'entrainement des ensembles (4) de réception de pièces le long dudit chemin (2, 3) de guidage et l'organe (7) de transfert entre plateforme (6) et chemin (2, 3) de guidage sont au moins partiellement communs.

6. Dispositif de stockage de pièces selon l'une des revendications précédentes, **caractérisé en ce qu'**au moins l'un des organes (7) de transfert fait office, lors de son mouvement aller ou retour correspondant au déplacement d'un ensemble (4) de réception entre plateforme (6) et chemin (2, 3) de guidage, de pousseur des ensembles (4) de réception disposés sur le chemin (2, 3) de guidage, de préférence par l'intermédiaire de l'ensemble déplacé.

7. Dispositif de stockage de pièces selon l'une des revendications précédentes, **caractérisé en ce que** chaque ensemble (4) de réception de pièce(s) comporte au moins une palette (9) porte-pièce(s) formant table de réception d'au moins une pièce et un porte-palette (10), ledit porte-palette (10) étant monté à coulissement le long du chemin (2, 3) de guidage et ladite palette (9) étant montée amovible sur le porte-palette (10), de préférence par déplacement à coulissement suivant un axe transversal à la direction de déplacement du porte-palette (10) sur le chemin (2, 3) de guidage, les porte-palettes (10) desdits ensembles étant disposés côte à côte le long de chaque chemin (2, 3) de guidage.

8. Dispositif de stockage de pièces selon la revendication précédente, **caractérisé en ce que** les porte-palettes (10), interchangeables entre eux, d'une part, et le châssis (1) et la plateforme (6) du ou des ascenseurs (5) d'autre part, sont équipés de moyens (12) d'indexation pour une indexation de la position d'au moins certains des porte-palettes (10) sur ledit châssis (1) ou la plateforme (6) du ou des ascenseurs (5) pour un déplacement en pas à pas des port-palettes (10) le long de chaque chemin (2, 3) de guidage, lesdits porte-palettes (10) occupant, au cours de leur déplacement en pas à pas, une pluralité de positions successives dont au moins l'une correspond à une position dans la zone (13) de chargement/déchargement au cours de laquelle la palette (9) associée audit porte-palette (10) est apte à être déplacée entre le dispositif de stockage et une unité de traitement des pièces.

9. Dispositif de stockage de pièces selon la revendication précédente, **caractérisé en ce que** la tige du vérin est configurée pour permettre lors de sa rentrée , par poussée de la lame sur l'ensemble de réception, le déplacement de l'ensemble de réception en direction du chemin de guidage jusqu'à ce que les moyens (121) d'indexation en position de l'ensemble de réception viennent en prise avec les moyens (122) d'indexation complémentaires ménagés sur le chemin de guidage.

10. Dispositif de stockage de pièces selon la revendication 9,
**caractérisé en ce que**, lors d'une extension du vérin, ladite lame est montée sur une partie de sa trajectoire mobile entre une position escamotée pour passer sous le porte-palette disposé sur une plateforme d'ascenseur et une position relevée active après passage dudit porte-palette, ladite lame étant en position relevée positionnée le long d'un des bords longitudinaux du porte-palette disposé sur la plateforme d'un ascenseur.

11. Dispositif de stockage selon l'une des revendications 7 ou 8,
**caractérisé en ce que** chaque porte-palette (10) est équipé, sur au moins l'un de ses bords longitudinaux, d'au moins une pastille en matière élastiquement déformable.

12. Dispositif de stockage de pièces selon l'une des revendications 7 ou 8, **caractérisé en ce que** le dispositif est équipé de moyens (15) de chargement/déchargement en palette (9) et **en ce que** chaque palette (9), déplaçable en pas à pas pour occuper une succession de positions, est accouplable, ou respectivement désaccouplable, des moyens (15) de chargement/déchargement lors de son déplacement entre deux positions dont l'une correspond à la position dans la zone (13) de chargement/déchargement.

13. Dispositif de stockage de pièces selon l'une des revendications précédentes,
**caractérisé en ce que** le châssis (1) est un châssis modulaire modulable en longueur des chemins (2, 3) de guidage et/ou en nombre de chemins de guidage.

## Patentansprüche

1. Vorrichtung zum Speichern von Teilen der Bauart, die mindestens ein Gestell (1), das mindestens zwei vorzugsweise etwa parallele übereinander angeordnete Führungswege (2, 3) begrenzt, von denen der eine (2) als oberer und der andere (3) als unterer bezeichnet wird, eine Vielzahl von Aufnahmeeinheiten (4) von auf der Vorrichtung zu lagernden Teilen, Antriebsmittel (8) der Aufnahmeeinheiten (4) von Teilen entlang jedes Führungswegs, Transfermittel (5, 7) der Teil(e)aufnahmeeinheiten von einem Führungsweg zu einem anderen umfasst, wobei mindestens ein Abschnitt des von den Teil(e)aufnahmeeinheiten (4) während ihrer Verlagerung durch die Antriebs- und/oder Transfermittel zurückgelegten Wegs imstande ist, eine Belade-/Entladezone (13) mit Teilen zu bilden, wobei die Transfermittel (5, 7) einerseits mindestens einen Aufzug (5) umfassen, der an einem Ende der Führungswege (2, 3) positionierbar ist, wobei der Aufzug (5) mindestens eine für die Passage der Plattform (6) von einem Führungsweg zu einem anderen nach oben und unten bewegbare Plattform (6) aufweist und andererseits mindestens ein Transferorgan (7), das imstande ist, die Verlagerung der Aufnahmeeinheiten (4) zwischen Plattform (6) und Führungsweg (2, 3) zu erlauben, wobei jedes Transferorgan (7) mit einem einziehbaren Erfassungsmittel (14) der Aufnahmeeinheit (4) ausgestattet ist, das imstande ist, bei einer der Bewegungen, wie der Hin-Bewegung, des Transferorgans (7) einzufahren und mit einem Erfassungsteil der Aufnahmeeinheit (4) bei der Bewegung in die entgegengesetzte Richtung, wie der ZurückBewegung, des Transferorgans (7) in Eingriff zu kommen, **dadurch gekennzeichnet, dass** jedes Transferorgan (7) ein Zylinder ist, der auf einem Führungsweg angeordnet ist und dass das einziehbare Erfassungsmittel (14), das den Zylinder ausstattet, von einer von einer Feder gespannten schwenkbaren Lamelle gebildet ist, die am Ende der Zylinderstange als Bestandteil des Transferorgans angeordnet ist, wobei sich diese Lamelle lotrecht zur Zylinderstange erstreckt und um eine Achse orthogonal zur Zylinderstange schwenkbar montiert ist.

2. Vorrichtung zum Speichern von Teilen nach Anspruch 1,
**dadurch gekennzeichnet, dass** jeder Führungsweg (2, 3) von zwei parallelen Schienen und nicht motorisierten Rollen mit parallelen Achsen, die zwischen den Schienen mit ihren zu den Schienen orthogonalen Rotationsachsen angeordnet sind, gebildet ist und dass jeder Zylinder als Bestandteil eines Transferorgans (7) mindestens teilweise zwischen zwei Schienen angeordnet ist.

3. Vorrichtung zum Speichern von Teilen nach einem der vorangehenden Ansprüche, **dadurch gekennzeichnet, dass** der oder jeder Aufzug (5) in Form einer an einem Ende eines Führungswegs (2, 3) angesetzten Einheit ausgebildet ist.

4. Vorrichtung zum Speichern von Teilen nach einem der vorangehenden Ansprüche, **dadurch gekennzeichnet, dass** die Transfermittel (5, 7) mindestens zwei Aufzüge (5), von denen einer an einem Ende und der andere am anderen Ende der Führungswege (2, 3) positionierbar ist und mindestens ein Transferorgan (7) je Führungsweg (2, 3) umfassen, wobei eines der Transferorgane (7) auf einem der Führungswege an einem Ende des Führungswegs und das andere oder ein anderes Transferorgan (7) auf den anderen Führungsweg am entgegengesetzten Ende des Führungswegs angeordnet ist, wobei die Plattformen (6) der Aufzüge (5) vorzugsweise mobil synchron derart montiert sind, dass sie sich gleichzeitig an den Enden eines selben Führungswegs (2, 3) erstrecken.

5. Vorrichtung zum Speichern von Teilen nach einem der vorangehenden Ansprüche, **dadurch gekennzeichnet, dass** die Antriebsmittel (8) der Teileaufnahmeeinheiten (4) entlang des Führungswegs (2, 3) und das Transferorgan (7) zwischen Plattform (6) und Führungsweg (2, 3) für mindestens einen der Führungswege (2, 3) mindestens teilweise gemeinsam sind.

6. Vorrichtung zum Speichern von Teilen nach einem der vorangehenden Ansprüche, **dadurch gekennzeichnet, dass** mindestens eines der Transferorgane (7) während seiner Hin- oder Zurückbewegung, die der Verlagerung einer Aufnahmeeinheit (4) zwischen Plattform (6) und Führungsweg (2, 3) entspricht, für die auf dem Führungsweg (2, 3) angeordneten Aufnahmeeinheiten (4), vorzugsweise vermittelnd über die verlagerte Einheit, als Drücker dient.

7. Vorrichtung zum Speichern von Teilen nach einem der vorangehenden Ansprüche, **dadurch gekennzeichnet, dass** jede Teil(e)aufnahmeeinheit (4) mindestens eine Teil(e)trägerpalette (9), die für mindestens ein Teil einen Aufnahmetisch bildet, und einen Palettenträger (10) aufweist, wobei der Palettenträger (10) entlang des Führungswegs (2, 3) gleitend montiert ist und die Palette (9) auf dem Palettenträger (10) lösbar montiert ist, vorzugsweise durch gleitende Verlagerung gemäß einer Achse, die zur Verlagerungsrichtung des Palettenträgers (10) auf dem Führungsweg (2, 3) transversal ist, wobei die Palettenträger (10) der Einheiten entlang jedes Führungswegs (2, 3) nebeneinander angeordnet sind.

8. Vorrichtung zum Speichern von Teilen nach vorangehendem Anspruch, **dadurch gekennzeichnet, dass** die untereinander austauschbaren Palettenträger (10) einerseits und das Gestell (1) und die Plattform (6) des oder der Aufzüge (5) andererseits mit Indexierungsmitteln (12) für eine Indexierung der Position mindestens einiger der Palettenträger (10) auf dem Gestell (1) oder der Plattform (6) des oder der Aufzüge (5) für eine schrittweise Verlagerung der Palettenträger (10) entlang jedes Führungswegs (2, 3) ausgestattet sind, wobei die Palettenträger (10) während ihrer schrittweisen Verlagerung eine Vielzahl aufeinanderfolgender Positionen belegen, von denen mindestens eine einer Position in der Belade-/Entladezone (13) entspricht, während der die dem Palettenträger (10) zugeordnete Palette (9) imstande ist, zwischen der Speichervorrichtung und einer Teilebehandlungsvorrichtung verlagert zu werden.

9. Vorrichtung zum Speichern von Teilen nach vorangehendem Anspruch, **dadurch gekennzeichnet, dass** die Zylinderstange konfiguriert ist, um beim Einfahren durch Druck der Lamelle auf die Aufnahmeeinheit der Verlagerung der Aufnahmeeinheit in Richtung des Führungswegs zu erlauben, bis die Indexierungsmittel (121) in Position der Aufnahmeeinheit mit den komplementären Indexierungsmitteln (122) in Eingriff kommen, die auf dem Führungsweg ausgebildet sind.

10. Vorrichtung zum Speichern von Teilen nach Anspruch 9, **dadurch gekennzeichnet, dass** die Lamelle bei einer Extension des Zylinders über einen Teil ihres Wegs zwischen einer eingezogenen Position, um unter den auf einer Aufzugplattform angeordneten Palettenträger zu gelangen, und einer aktiven angehobenen Position nach Passage des Palettenträgers, mobil montiert ist, wobei die Lamelle in angehobener Position entlang einer der Längsränder des auf der Plattform eines Auszugs angeordneten Palettenträgers positioniert ist.

11. Speichervorrichtung nach einem der Ansprüche 7 oder 8, **dadurch gekennzeichnet, dass** jeder Palettenträger (10) an mindestens einem seiner Längsränder mit mindestens einem Plättchen aus elastisch verformbaren Material ausgestattet ist.

12. Vorrichtung zum Speichern von Teilen nach einem der Ansprüche 7 oder 8, **dadurch gekennzeichnet, dass** die Vorrichtung mit Belade-/Entlademitteln (15) in Palette (9) ausgestattet ist und dass jede Palette (9), die schrittweise verlagerbar ist, um eine Abfolge von Positionen einzunehmen, während ihrer Verlagerung zwischen zwei Positionen, von denen eine der Position in der Entlade-/Beladezone (13) entspricht, an die Belade-Entlademittel (15) koppelbar oder beziehungsweise von ihnen entkoppelbar ist.

13. Vorrichtung zum Speichern von Teilen nach einem der vorangehenden Ansprüche, **dadurch gekennzeichnet, dass** das Gestell (1) ein längenmäßig zu den Führungswegen und/oder anzahlmäßig zu den Führungswegen modulierbares modulares Gestell ist.

## Claims

1. An apparatus for storing parts, of the type comprising at least one chassis (1) defining at least two guide paths (2, 3), which are preferably substantially parallel, superimposed, one of which (2) is called upper, the other of which (3) is called lower, a plurality of receiving assemblies (4) for part(s) to be stored on said apparatus, means (8) for driving said part(s) receiving assemblies (4) along each guide path, means (5, 7) for transferring part(s) receiving assemblies from one guide path to another, at least one portion of the journey followed by said part(s) receiving assemblies (4) during their movement by driving and/or transfer means being able to form a part(s) loading/unloading zone (13), said transfer means (5, 7) on the one hand comprising at least one lift (5), able to be positioned at one end of said guide paths (2, 3), said lift (5) including at least one platform (6) that can be moved up and down for the passage of said platform (6) from one guide path to another and, on the other hand, comprising at least one transfer member able to allow the movement of the receiving assemblies (4) between the platform (6) and the guide path (2, 3), each transfer member (7) being equipped with a retractable means (14) for grasping the receiving assembly (4) able to withdraw during one of the movements, such as the outbound movement, of said transfer member (7), and to engage with a grasping part of said receiving assembly (4) during the movement in the opposite direction, such as the return movement, of said transfer member (7), **characterized in that** each transfer member (7) is a cylinder positioned on a guide path and **in that** the retractable gripping means (14) including said cylinder is formed by a pivoting blade loaded by a spring positioned at the end of the rod of the cylinder making up the transfer member, said blade extending perpendicular to the rod of the cylinder and being pivotably mounted around an axis orthogonal to the rod of the cylinder.

2. The apparatus for storing parts according to claim 1, **characterized in that** each guide path (2, 3) is formed by two parallel rails and non-motorized rollers with parallel axes positioned between said rails with their axes of rotation orthogonal to said rails and **in that** each cylinder making up a transfer member (7) is positioned at least partially between two rails.

3. The apparatus for storing parts according to one of the preceding claims, **characterized in that** the or each lift (5) is made in the form of an assembly attached to one end of a guide path (2, 3).

4. The apparatus for storing parts according to one of the preceding claims, **characterized in that** the transfer means (5, 7) comprise at least two lifts (5), one which is positioned at one end, the other of which is positioned at the other end, of said guide paths (2, 3), and at least one transfer member (7) per guide path (2, 3), one of the transfer members (7) being positioned on one of the guide paths of one end of said guide path, and the other or another transfer member (7) being positioned on the other guide path at the opposite end of said guide path, the platforms (6) of said lifts (5) preferably being movably mounted synchronously so as to extend simultaneously at the ends of the same guide path (2, 3).

5. The apparatus for storing parts according to one of the preceding claims, **characterized in that**, for at least one of the guide paths (2, 3), the driving means (8) for driving the part receiving assemblies (4) along said guide path (2, 3) and the transfer member (7) between the platform (6) and the guide path (2, 3) are at least partially shared.

6. The apparatus for storing parts according to one of the preceding claims, **characterized in that** at least one of the transfer members (7) serves, during its outbound or return movement corresponding to the movement of a receiving assembly (4) between the platform (6) and the guide path (2, 3), as a pusher for pushing the receiving assemblies (4) positioned on the guide path (2, 3), preferably by means of the moved assembly.

7. An apparatus for storing parts according to one of the preceding claims, **characterized in that** each assembly (4) for receiving part(s) includes at least one part supporting pallet (9) forming a receiving table for at least one part and a pallet support (10), said pallet support (10) being mounted sliding along the guide path (2, 3) and said pallet (9) being movably mounted on said pallet support (10), preferably a sliding movement along an axis transverse to the direction of movement of the pallet support (10) on the guide path (2, 3), the pallet supports (10) of said assemblies being positioned side by side along each guide path (2, 3).

8. The apparatus for storing parts according to the preceding claims, **characterized in that** the pallet supports (10), which are interchangeable with each other, on one hand, and the chassis (1) and the platform (6) of the lift(s) (5) the other hand, are equipped with indexing means (12) for indexing the position of at least some of the pallet supports (10) on said chassis (1) or the platform (6) of the lift(s) (5) for a stepwise movement of the pallet supports (10) along each guide path (2, 3), said pallet supports (10) occupying, during their stepwise movement, a plurality of successive positions, at least one of which corresponds to a position in the loading/unloading zone (13) during which the pallet (9) associated with said pallet support (10) can be moved between the storage device and a part treatment unit.

9. The apparatus for storing parts according to the preceding claim, **characterized in that** the rod of the cylinder is configured to allow, when it is withdrawn, by pressing of the blade on the receiving assembly, the movement of the receiving assembly toward the guide path until the position indexing means (121) of the receiving assembly engage with the complementary indexing means (122) arranged on the guide path.

10. The apparatus for storing parts according to claim 9,
**characterized in that**, during an extension of the cylinder, said blade is mounted on a part of its trajectory movable between a retracted position to pass below the pallet support positioned on a lift platform and an active raised position after passage of said pallet support, said blade being in the raised position positioned along one of the longitudinal edges of the pallet support positioned on the platform of a lift.

11. The storage apparatus according to one of claims 7 or 8,
**characterized in that** each pallet support (10) is equipped, on at least one of its longitudinal edges, with at least one pellet made from an elastically deformable material.

12. The apparatus for storing parts according to one of claims 7 or 8, **characterized in that** the device is equipped with loading/unloading means (15) on a pallet (9) and **in that** each pallet (9), movable stepwise to occupy a series of positions, can be coupled with, or separated from, respectively, loading/unloading means (15) during its movement between two positions, one of which corresponds to the position in a loading/unloading zone (13).

13. The apparatus for storing parts according to one of the preceding claims, **characterized in that** the chassis (1) is a configurable chassis, which can be modulated in terms of length of the guide paths (2, 3) and/or number of paths.
